# EUROPEAN PATENT SPECIFICATION

(11) **EP 4 398 207 B1**
(45) Date of publication and mention of the grant of the patent: **01.04.2026**
(21) Application number: 22862730.3
(22) Date of filing: 16.05.2022
(51) Int. Cl.: G07C 5/00, G07C 5/08, G06F 16/29, H04N 21/43, H04N 21/435, H04N 21/8547, H04N 21/44, H04Q 9/00, G01D 21/02, H04N 21/236, H04N 21/258, H04N 21/434, H04N 21/854, H04N 21/235, H04N 21/84

(54) **DYNAMIC VIDEO PRESENTATION METHOD APPLIED TO GIS AND SYSTEM THEREOF**
AUF GIS ANGEWANDTES DYNAMISCHES VIDEOPRÄSENTATIONSVERFAHREN UND SYSTEM DAFÜR
PROCÉDÉ DE PRÉSENTATION DE VIDÉO DYNAMIQUE APPLIQUÉ À GIS ET SON SYSTÈME

(30) Priority: 30.08.2021 CN 202111006681
(43) Date of publication of application: 10.07.2024
(73) Proprietor: Chengdu Jouav Automation Tech Co., Ltd., Chengdu, Sichuan 610095 (CN)
(72) Inventor: LEI, Ming, Chengdu, Sichuan 610095 (CN); LIU, Hang, Chengdu, Sichuan 610095 (CN); SUN, Tingting, Chengdu, Sichuan 610095 (CN); FENG, Yundi, Chengdu, Sichuan 610095 (CN); YUAN, Rui, Chengdu, Sichuan 610095 (CN)
(74) Representative: Santarelli
(86) International application number: PCT/CN2022/093004
(87) International publication number: WO 2023/029588

(56) References cited:
- WO-A1-2017/160381
- CN-A- 105 847 750
- CN-A- 110 235 188
- CN-A- 110 989 840
- CN-A- 110 989 840
- CN-A- 112 218 051
- MISB ST ET AL: "23 October 2014 Motion Imagery Standards Board 1 UAS Datalink Local Set", 23 October 2014 (2014-10-23), XP055333434, Retrieved from the Internet <URL:http://www.gwg.nga.mil/misb/docs/standards/ST0601.8.pdf> [retrieved on 20241106]

## Description

### TECHNICAL FIELD

The present disclosure relates to the field of geographic information technology, in particular to a dynamic video presentation method and a dynamic video presentation system for a Geographic Information System (GIS).

### BACKGROUND

In the current geographic information technology, as a popular application of a GIS, videos collected by a sensor is played, and meanwhile video-related geographic elements, such as a trajectory and a field of view of a camera, are displayed on a map, so as to play a full-motion video. In order to achieve the above-mentioned application, it is necessary for the GIS to receive video stream data and metadata. The metadata includes longitude and latitude, yaw angle, pitch angle, roll angle, vertical/horizontal field angle, etc.

Usually, in a conventional dynamic video presentation method for the GIS, two kinds of data transmission methods are adopted. In a first data transmission method, a transmitting end generates a video stream including the metadata and conforming to a Motion Imagery Standard Board (MISB), and a receiving end transmits the video stream to a streaming media server for forwarding the video stream and pushes the video stream to the GIS. In a second data transmission method, the transmitting end transmits the video stream and the metadata separately without any synchronization, and the receiving end performs synchronization on the received video stream and metadata, encapsulates the video stream and metadata, and pushes them to the GIS.

In the first data transmission method, the video stream including the metadata and conforming to the MISB is generated by the transmitting end, but it is impossible for a common streaming media server to forward the video stream, i.e., a dedicated streaming media server needs to be designed. In addition, when the video stream and the metadata are directly encapsulated at the transmitting end, it is impossible for a third-party system (a system other than the GIS) to parse the video stream and the metadata. In the second data transmission method, the video stream and the metadata are transmitted separately, and the synchronization between the video stream and the metadata during the encapsulation at the receiving end is adversely affected due to different communication links. At this time, when the GIS parses the video stream, an image displayed in real time does not synchronize with the geographic elements, i.e., it is impossible for the geographic elements to accurately represent the image-related data. CN110989840B synchronizes spatial data and image data on a time axis at a front-end device, enabling a back-end device to perform augmented reality rendering using time-aligned data, thereby eliminating jitter in rendered geographic elements. MISB_Standard_0601 introduces a bandwidth-efficient KLV Local Set using BER-OID encoded tags, BER-encoded lengths, mandatory timestamp/checksum fields, and nested set support for transmitting essential UAS motion imagery metadata over constrained (1-5Mb/s) datalinks.

In a word, it is impossible for the conventional dynamic video presentation method to make a compromise between the synchronization and the application diversity.

### SUMMARY

The invention is defined by the appended independent claims and will be more readily understood after reading the following detailed description in conjunction with the accompanying drawings.

### BRIEF DESCRIPTION OF THE DRAWINGS

Fig. 1 is a flow chart of a dynamic video presentation method for a GIS according to one embodiment of the present disclosure; and
Fig. 2 is a schematic view showing a dynamic video presentation system for a GIS according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

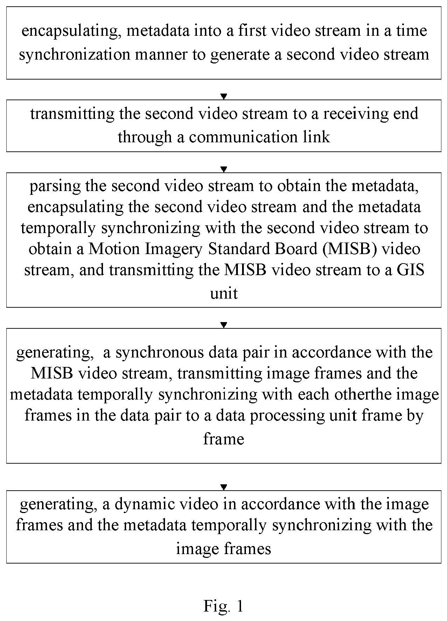

As shown in Fig. 1, the present disclosure provides in some embodiments a dynamic video presentation method for a GIS, which includes: encapsulating, by a transmitting end, metadata into a first video stream in a time synchronization manner to generate a second video stream; transmitting the second video stream to a receiving end through a communication link; parsing the second video stream to obtain the metadata, encapsulating the second video stream and the metadata temporally synchronizing with the second video stream to obtain an MISB video stream, and transmitting the MISB video stream to a GIS unit; generating, by the GIS unit, a synchronous data pair in accordance with the MISB video stream, transmitting image frames and the metadata temporally synchronizing with the image frames in the data pair to a data processing unit frame by frame, generating, by the data processing unit, single-frame image data and geographic element data temporally synchronizing with the single-frame image data in accordance with the image frames and the metadata, and rendering the single-frame image data and the geographic element data to a display interface. The type of the metadata depends on a type of a mobile device with a sensor. For example, when the mobile device is a boat, the metadata includes device state data, e.g., GNSS data, wind direction or course. When the mobile device is an aircraft, the metadata at least includes aircraft Position and Orientation System (POS) data, aircraft state, load sensor type, pod POS data, pod state and image processing board data. When a sensor is a fixed camera, the metadata includes positioning, viewing direction, pitch angle, field angle, height of pole, channel, transmission bandwidth, device Identity Document (ID), etc. The aircraft POS data at least includes yaw angle, pitch angle, roll angle, longitude and latitude, height, distance from a starting point, azimuth relative to the starting point, and velocity. The pod POS data at least includes horizontal field angle in visible light, vertical field angle in visible light, horizontal field angle in infrared light, vertical field angle in infrared light, camera focal length, course Euler angle of the pod, pitch Euler angle of the pod, course frame angle, pitch frame angle, roll frame angle, longitude, latitude and height of an object, velocity of the object, velocity azimuth of the object, and estimated distance between the object and the aircraft.

The dynamic video presentation method further includes, after the second video stream has been transmitted to the receiving end through the communication link, parsing the second video stream into the first video stream and the metadata temporally synchronizing with the first video stream, encapsulating the first video stream and the metadata to obtain the MISB video stream, and transmitting the MISB video stream to the GIS unit.

Further, the encapsulating the first video stream or the second video stream and the metadata to obtain the MISB video stream includes: creating a Moving Picture Experts Group (MPEG) Transport Stream (TS) container; generating two data streams in the MPEG TS container, including a video stream and a Society of Motion Picture Television Engineers (SMPTE) Key-Length-Value (KLV) data stream; and writing a video frame and the metadata temporally synchronizing with the video frame in the first video stream or second video stream into corresponding positions in the data streams to generate an MPEG TS data packet, i.e., the MISB video stream. The generating, by the data processing unit, the geographic element data in accordance with the metadata includes: calculating coordinates of an Unmanned Aerial Vehicle (UAV) in accordance with GNSS data; calculating coordinates of a center of a field of view of the UAV in accordance with the GNSS data and a field angle; and calculating a range of the field of view on a map in accordance with the field angle and a pitch yaw angle.

The encapsulating, by the transmitting end, the metadata into the first video stream in a time synchronization manner to generate the second video stream includes: obtaining the first video stream and the metadata including an absolute time; and encapsulating the metadata into predefined fields of the first video stream frame by frame in an absolute-time synchronization manner, so as to obtain the second video stream including the metadata. In the case that a communication transport protocol is H264 or H265, the predefined field is an SEI field, and in the case that the communication transport protocol is a TS encapsulation protocol, the predefined field is a custom field.

The obtaining the first video stream and the metadata including the absolute time includes: outputting a first control signal for collecting the first video stream and a second control signal for collecting the metadata through a same reference clock circuit, the first control signal and the second control signal having a same reference clock; and obtaining the first video stream and the metadata including the absolute time in accordance with the first control signal and the second control signal. In the embodiments of the present disclosure, reference clock signals from a same reference clock circuit are taken as the first control signal and the second control signal, and timestamps in the first video stream and the metadata are set with reference to a same clock source, so the timestamps are considered as absolute times relative to each other in a system including the same clock source.

The dynamic video presentation method further includes: in the case that the receiving end and the GIS unit are not located within a same local area network and the receiving end has received the second video stream, encapsulating, by a streaming media transmitting end, the second video stream in accordance with a communication protocol to obtain a third video stream, and transmitting the third video stream to a streaming media server; forwarding, by the streaming media server, the third video stream to a streaming media receiving end in a transparent transmission manner; parsing, by the streaming media receiving end, the third video stream into the second video stream, and parsing the second video stream to obtain the metadata; and encapsulating the second video stream and the metadata temporally synchronizing with the second video stream to obtain the MISB video stream, and transmitting the MISB video stream to the GIS unit. In the case that the receiving end and the GIS unit are not located in the same local area network, a communication protocol used by the communication link between the receiving end and the GIS unit is a communication protocol at an application layer, e.g., a Real Time Streaming Protocol (RTSP), a Real Time Messaging Protocol (RTMP), or a Hyper Text Transfer Protocol (HTTP). The streaming media receiving end further parses the third video stream into the second video stream, parses the second video stream into the first video stream and the metadata temporally synchronizing with the first video stream, encapsulates the first video stream and the metadata to obtain the MISB video stream, and transmits the MISB video stream to the GIS unit. Through the streaming media server for forwarding the video stream, it is able for the GIS unit to render the single-frame image data and the geographic element data in the case that the receiving end and the GIS unit are not located within the same local area network and the transmitting end encapsulates the metadata into the first video stream in a time synchronization manner to obtain the second video stream.

The dynamic video presentation method further includes: encapsulating, by the transmitting end, the first video stream and the metadata temporally synchronizing with the first video stream directly to obtain the MISB video stream, and transmitting the MISB video stream to the receiving end through the communication link; and forwarding, by the receiving end, the MISB video stream to the GIS unit.

The parsing the second video stream to obtain the metadata includes: parsing the second video stream into a plurality of image frames including the metadata in accordance with a frame start field; and extracting the metadata in the image frame in accordance with the frame start field, and obtaining the second video stream including the image frames or obtaining the first video stream not including the metadata. The first video stream and the metadata are transmitted synchronously, and the receiving end extracts the metadata from a predefined field of the second video stream without any damage to the first video stream, so it is able to ensure the purity of the first video stream and the metadata as well as the independence therebetween.

For ease of understanding, the following description will be given when a device with a sensor is a UAV, i.e., a transmitting end, and a ground station, i.e., a receiving end, and the GIS unit are located within a same local area network. Upon the receipt of an instruction from the ground station, a load processing sub-unit of the UAV outputs the first control signal and the second control signal through a same reference clock circuit. A pod of the UAV collects an image in accordance with the first control signal and generates the first video stream. A data collection unit of the UAV collects measurement data in accordance with the second control signal to generate the metadata. The data collection unit may be an Inertial Measurement Unit (IMU) or a laser ranging unit. The load processing sub-unit encapsulates the metadata into a predefined field of the first video stream frame by frame in an absolute-time synchronization manner, generates the second video stream including the metadata, and transmits the second video stream to the ground station through a downlink. The ground station splits the second video stream into a plurality of image frames including the metadata in accordance with a frame start field, and extracts the metadata in all the image frames in accordance with a frame header type, so as to generate the first video stream consisting of all the image frames not including the metadata. The ground station encapsulates the second video stream or the first video stream as well as the metadata to obtain the MISB video stream, and transmits the MISB video stream to the GIS unit. The GIS unit generates a data pair in accordance with the MISB video stream, and transmits the image frame and the metadata temporally synchronizing with the image frame in the data pair to the image processing unit frame by frame. The data processing unit generates the single-frame image data and the geographic element data temporally synchronizing with the single-frame image data in accordance with the image frames and the metadata, and renders the single-frame image data and the geographic element data to the display interface.

According to the embodiments of the present disclosure, the transmitting end encapsulates the metadata into the first video stream in a time synchronization manner to obtain the second video stream. The receiving end parses the second video stream to extract the metadata, and encapsulates the first video stream or the second video stream and the metadata to obtain the MISB video stream for the GIS unit, so that the GIS unit displays an image and geographic elements temporally synchronizing with the image in real time. The receiving end further parses the second video stream, so as to obtain the metadata and the first video stream for the other application scenarios.

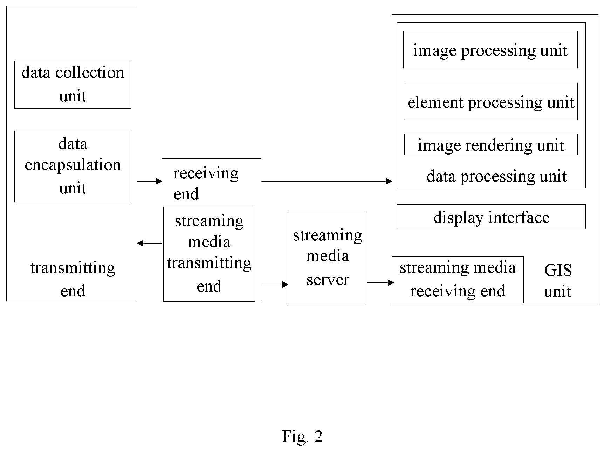

As shown in Fig. 2, the present disclosure further provides in some embodiments a dynamic video presentation system for a GIS, which includes: a transmitting end configured to encapsulate metadata into a first video stream in a time synchronization manner to generate a second video stream, and transmit the second video stream to a receiving end through a communication link; the receiving end configured to parse the second video stream to obtain the metadata, encapsulate the second video stream and the metadata temporally synchronizing with the second video stream to obtain an MISB video stream, and transmit the MISB video stream to a GIS unit; the GIS unit configured to generate a data pair in accordance with the MISB video stream, and transmit image frames and the metadata temporally synchronizing with each other in the data pair to a data processing unit of the GIS unit frame by frame, so that the data processing unit generates single-frame image data and geographic element data temporally synchronizing with the single-frame image data in accordance with the image frames and the metadata, and renders the single-frame image data and the geographic element data to a display interface.

The dynamic video presentation system further includes a streaming media server. In the case that the receiving end and the GIS unit are not located within a same local area network and the receiving end has received the second video stream, a streaming media transmitting end of the receiving end encapsulates the second video stream in accordance with a communication protocol to obtain a third video stream, and transmits the third video stream to the streaming media server. The streaming media server forwards the third video stream to a streaming media receiving end in a transparent transmission manner. The streaming media receiving end parses the third video stream into the second video stream, parses the second video stream to obtain the metadata, encapsulates the second video stream and the metadata temporally synchronizing with the second video stream to obtain the MISB video stream, and transmits the MISB video stream to the GIS unit.

The data processing unit includes: an image processing unit configured to generate the single-frame image data in accordance with the image frame; an element processing unit configured to generate the geographic element data in accordance with the metadata; and an image rendering unit configured to render the single-frame image data and the geographic element data to the display interface.

The transmitting end includes: a data collection unit configured to collect the metadata and the first video stream; and a data encapsulation unit configured to generate the second video stream including the metadata.

The dynamic video presentation method and system have been described hereinabove in details. The above embodiments have been described in a progressive manner, and the same or similar contents in the embodiments have not been repeated, i.e., each embodiment has merely focused on the difference from the others. Especially, the device embodiments are substantially similar to the method embodiments, and thus have been described in a simple manner.

It should be further appreciated that, the units and algorithm steps described herein may be implemented as electronic hardware, computer software or both. In order to clearly explain the interchangeability of hardware and software, the general description about functions of the illustrative units and steps has been given. Whether these functions are implemented as software or hardware depends on a specific application and an entire system design constraint. The functions may be achieved in various ways with respect to a specific application.

The steps in the method or algorithm described herein may be directly included in hardware, a software module executed by a processor, or both. The software module may reside in a Random Access Memory (RAM), a flash memory, a Read-Only Memory (ROM), an Electrically Programmable ROM (EPROM), an Electrically Erasable PROM (EEPROM), a register, a hard disc, a mobile disc, a Compact Disc-ROM (CD-ROM), or any other storage medium known in the art.

## Claims

1. A dynamic video presentation method for a Geographic Information System, GIS, comprising:
outputting, by a transmitting end, a first control signal for collecting the first video stream and a second control signal for collecting the metadata through a same reference clock circuit, the first control signal and the second control signal having a same reference clock;
obtaining the first video stream and the metadata comprising the absolute time in accordance with the first control signal and the second control signal;
encapsulating the metadata into predefined fields of the first video stream frame by frame in an absolute-time synchronization manner, so as to obtain the second video stream comprising the metadata;
transmitting the second video stream to a receiving end through a communication link;
parsing the second video stream to obtain the metadata, encapsulating the second video stream and the metadata temporally synchronizing with the second video stream to obtain a Motion Imagery Standard Board, MISB, video stream, and transmitting the MISB video stream to a GIS unit; and
generating, by the GIS unit, a synchronous data pair in accordance with the MISB video stream, transmitting image frames and the metadata temporally synchronizing with the image frames in the data pair to a data processing unit frame by frame, and generating, by the data processing unit, a dynamic video in accordance with the image frames and the metadata temporally synchronizing with the image frames;
in the case that the receiving end and the GIS unit are not located within a same local area network and the receiving end has received the second video stream, encapsulating, by a streaming media transmitting end, the second video stream in accordance with a communication protocol to obtain a third video stream, and transmitting the third video stream to a streaming media server;
forwarding, by the streaming media server, the third video stream to a streaming media receiving end in a transparent transmission manner;
parsing, by the streaming media receiving end, the third video stream into the second video stream, and parsing the second video stream to obtain the metadata; and
encapsulating the second video stream and the metadata temporally synchronizing with the second video stream to obtain the MISB video stream, and transmitting the MISB video stream to the GIS unit.

2. The dynamic video presentation method according to claim **1,** further comprising:
encapsulating, by the transmitting end, the first video stream and the metadata temporally synchronizing with the first video stream directly to obtain the MISB video stream, and transmitting the MISB video stream to the receiving end through the communication link; and
forwarding, by the receiving end, the MISB video stream to the GIS unit.

3. The dynamic video presentation method according to claim 1, wherein the generating, by the data processing unit, the dynamic video in accordance with the image frames and the metadata temporally synchronizing with the image frames comprises generating, by the data processing unit, single-frame image data and geographic element data temporally synchronizing with the single-frame image data in accordance with the image frames and the metadata, and rendering the single-frame image data and the geographic element data to a display interface.

4. The dynamic video presentation method according to claim 1, wherein the predefined field is a Supplemental Enhancement Information, SEI field.

5. A dynamic video presentation system for a GIS, comprising:
a transmitting end configured to output a first control signal for collecting the first video stream and a second control signal for collecting the metadata through a same reference clock circuit, the first control signal and the second control signal having a same reference clock; to obtain the first video stream and the metadata comprising the absolute time in accordance with the first control signal and the second control signal; to encapsulate the metadata into predefined fields of the first video stream frame by frame in an absolute-time synchronization manner, so as to obtain the second video stream comprising the metadata, and to transmit the second video stream to a receiving end through a communication link;
the receiving end configured to parse the second video stream to obtain the metadata, encapsulate the second video stream and the metadata temporally synchronizing with the second video stream to obtain an MISB video stream, and transmit the MISB video stream to a GIS unit; and
the GIS unit configured to generate a synchronous data pair in accordance with the MISB video stream, and transmit image frames and the metadata temporally synchronizing with the image frames in the data pair to a data processing unit of the GIS unit frame by frame, so that the data processing unit generates a dynamic video in accordance with the image frames and the metadata temporally synchronizing with the image frames;
wherein the dynamic video presentation system further comprises a streaming media server,
wherein in the case that the receiving end and the GIS unit are not located within a same local area network and the receiving end has received the second video stream, a streaming media transmitting end of the receiving end encapsulates the second video stream in accordance with a communication protocol to obtain a third video stream, and transmits the third video stream to the streaming media server, wherein the streaming media server forwards the third video stream to a streaming media receiving end in a transparent transmission manner,
wherein the streaming media receiving end parses the third video stream into the second video stream, parses the second video stream to obtain the metadata, encapsulates the second video stream and the metadata temporally synchronizing with the second video stream to obtain the MISB video stream, and transmits the MISB video stream to the GIS unit.

6. The dynamic video presentation system according to claim 5, wherein the data processing unit comprises:
an image processing unit configured to generate single-frame image data in accordance with the image frame;
an element processing unit configured to generate geographic element data in accordance with the metadata; and
an image rendering unit configured to render the single-frame image data and the geographic element data to a display interface.

7. The dynamic video presentation system according to claim 5, wherein the transmitting end comprises:
a data collection unit configured to collect the metadata and the first video stream; and
a data encapsulation unit configured to generate the second video stream comprising the metadata.

## Patentansprüche

1. Dynamisches Videopräsentationsverfahren für ein geografisches Informationssystem, GIS, umfassend:
Ausgeben eines ersten Steuersignals zum Erfassen des ersten Videostreams und eines zweiten Steuersignals zum Erfassen der Metadaten über dieselbe Referenztaktschaltung durch ein Sendeende, wobei das erste Steuersignal und das zweite Steuersignal denselben Referenztakt aufweisen;
Erhalten des ersten Videostreams und der Metadaten, die die absolute Zeit gemäß dem ersten Steuersignal und dem zweiten Steuersignal umfassen;
Einkapseln der Metadaten in vordefinierte Felder des ersten Videostreams frameweise in absoluter Zeitsynchronisation, um den zweiten Videostream zu erhalten, der die Metadaten umfasst;
Senden des zweiten Videostreams an ein Empfangsende über eine Kommunikationsverbindung;
Parsen des zweiten Videostreams, um die Metadaten zu erhalten, Einkapseln des zweiten Videostreams und der zeitlich mit dem zweiten Videostream synchronisierenden Metadaten, um einen Motion Imagery Standard Board, MISB,-Videostream zu erhalten, und Übertragen des MISB-Videostreams an eine GIS-Einheit; und
Erzeugen eines synchronen Datenpaars gemäß dem MISB-Videostream durch die GIS-Einheit, Senden von Bildframes und der zeitlich mit den Bildframes im Datenpaar synchronisierenden Metadaten an eine Datenverarbeitungseinheit frameweise und Erzeugen eines dynamischen Videos gemäß den Bildframes und der zeitlich mit den Bildframes synchronisierenden Metadaten durch die Datenverarbeitungseinheit;
für den Fall, dass sich das Empfangsende und die GIS-Einheit nicht innerhalb desselben lokalen Netzwerks befinden und das Empfangsende den zweiten Videostream empfangen hat, indem es durch ein Streaming-Medien-Sendeende den zweiten Videostream gemäß einem Kommunikationsprotokoll einkapselt, um einen dritten Videostream zu erhalten, und den dritten Videostream an einen Streaming-Medienserver überträgt;
Weiterleiten des dritten Videostreams durch den Streaming-Medienserver an ein Streaming-Medien-Empfangsende in transparenter Übertragungsart;
Parsen des dritten Videostreams durch das Empfangsende des Streaming-Mediums in den zweiten Videostream und Parsen des zweiten Videostreams, um die Metadaten zu erhalten; und
Einkapseln des zweiten Videostreams und der zeitlich mit dem zweiten Videostream synchronisierenden Metadaten, um den MISB-Videostream zu erhalten, und Übertragen des MISB-Videostreams an die GIS-Einheit.

2. Dynamisches Videopräsentationsverfahren nach Anspruch 1, ferner umfassend:
direktes Einkapseln des ersten Videostreams und der mit dem ersten Videostream zeitlich synchronisierenden Metadaten durch das Sendeende mit dem ersten Videostream, um den MISB-Videostream zu erhalten, und Senden des MISB-Videostreams an das Empfangsende über die Kommunikationsverbindung; und
Weiterleiten des MISB-Videostreams durch das Empfangsende an die GIS-Einheit.

3. Dynamisches Videopräsentationsverfahre nach Anspruch 1, wobei das Erzeugen des dynamischen Videos gemäß den Bildframes und den zeitlich mit den Bildframes synchronisierenden Metadaten durch die Datenverarbeitungseinheit das Erzeugen von Einzelframedaten und geografischen Elementdaten umfasst, die zeitlich mit den Einzelframedaten gemäß den Bildframes und den Metadaten synchronisieren, und das Wiedergeben der Einzelframedaten und der geografischen Elementdaten auf einer Anzeigeoberfläche.

4. Dynamisches Videopräsentationsverfahren nach Anspruch 1, wobei das vordefinierte Feld ein Supplemental Enhancement Information, SEI,-Feld ist.

5. Dynamisches Videopräsentationssystem für ein GIS, umfassend:
ein Sendeende, das so eingerichtet ist, dass es ein erstes Steuersignal zum Erfassen des ersten Videostreams und ein zweites Steuersignal zum Erfassen der Metadaten über dieselbe Referenztaktschaltung ausgibt, wobei das erste Steuersignal und das zweite Steuersignal denselben Referenztakt aufweisen; um den ersten Videostream und die Metadaten zu erhalten, die die absolute Zeit gemäß dem ersten Steuersignal und dem zweiten Steuersignal umfassen;
die Metadaten frameweise in vordefinierte Felder des ersten Videostreams in absoluter Zeitsynchronisation einkapselt, um den zweiten Videostream, der die Metadaten umfasst, zu erhalten, und den zweiten Videostream über eine Kommunikationsverbindung an ein Empfangsende überträgt;
das Empfangsende, das so eingerichtet ist, dass es den zweiten Videostream analysiert, um die mit dem zweiten Videostream zeitlich synchronisierenden Metadaten zu erhalten, um einen MISB-Videostream zu erhalten, und den MISB-Videostream an eine GIS-Einheit zu übertragen; und
die GIS-Einheit, die so eingerichtet ist, dass sie ein synchrones Datenpaar gemäß dem MISB-Videostream erzeugt und Bildframes und die Metadaten zeitlich synchron mit den Bildframes in dem Datenpaar an eine Datenverarbeitungseinheit der GIS-Einheit frameweise überträgt, so dass die Datenverarbeitungseinheit ein dynamisches Video gemäß den Bildframes und den Metadaten zeitlich synchron mit den Bildframes erzeugt;
wobei das dynamische Videopräsentationssystem ferner einen Streaming-Medienserver umfasst,
wobei für den Fall, dass sich das Empfangsende und die GIS-Einheit nicht innerhalb desselben lokalen Netzwerks befinden und das Empfangsende den zweiten Videostream empfangen hat, ein Streaming-Mediensende des Empfangsendes den zweiten Videostream gemäß einem Kommunikationsprotokoll einkapselt, um einen dritten Videostream zu erhalten, und den dritten Videostream an den Streaming-Medienserver überträgt, wobei der Streaming-Medienserver den dritten Videostream in transparenter Übertragungsweise an ein Streaming-Medien-Empfangsende weiterleitet,
wobei das Empfangsende des Streaming-Mediums den dritten Videostream in den zweiten Videostream parst, den zweiten Videostream parst, um die Metadaten zu erhalten, den zweiten Videostream und die zeitlich synchronisierenden Metadaten mit dem zweiten Videostream verkapselt, um den MISB-Videostream zu erhalten, und den MISB-Videostream an die GIS-Einheit überträgt.

6. Dynamisches Videopräsentationssystem nach Anspruch 5, wobei die Datenverarbeitungseinheit Folgendes umfasst:
eine Bildverarbeitungseinheit, die so eingerichtet ist, dass sie Einzelframedaten in Übereinstimmung mit dem Bildframe erzeugt;
eine Elementverarbeitungseinheit, die so eingerichtet ist, dass sie geografische Elementdaten in Übereinstimmung mit den Metadaten erzeugt; und
eine Bildwiedergabeeinheit, die so eingerichtet ist, dass sie die Einzelframedaten und die geografischen Elementdaten an eine Anzeigeschnittstelle wiedergibt.

7. Dynamisches Videopräsentationssystem nach Anspruch 5, wobei das Sendeende Folgendes umfasst:
eine Datenerfassungseinheit, die zum Erfassen der Metadaten und des ersten Videostreams eingerichtet ist; und
eine Dateneinkapselungseinheit, die so eingerichtet ist, dass sie den zweiten Videostream erzeugt, der die Metadaten umfasst.

## Revendications

1. Procédé de présentation de vidéo dynamique pour un système d'information géographique, GIS, comportant :
la sortie, par une extrémité d'émission, d'un premier signal de commande pour la collecte du premier flux vidéo et d'un deuxième signal de commande pour la collecte des métadonnées par le biais d'un même circuit d'horloge de référence, le premier signal de commande et le deuxième signal de commande ayant une même horloge de référence ;
l'obtention du premier flux vidéo et des métadonnées comportant le temps absolu conformément au premier signal de commande et au deuxième signal de commande ;
l'encapsulation des métadonnées dans des champs prédéfinis du premier flux vidéo trame par trame d'une manière à synchronisation en temps absolu, de façon à obtenir le deuxième flux vidéo comportant les métadonnées ;
l'émission du deuxième flux vidéo vers une extrémité de réception par le biais d'une liaison de communication ;
la décomposition du deuxième flux vidéo pour obtenir les métadonnées, l'encapsulation du deuxième flux vidéo et des métadonnées se synchronisant temporellement avec le deuxième flux vidéo pour obtenir un flux vidéo de la commission des normes de l'imagerie en mouvement, MISB, et l'émission du flux vidéo MISB vers une unité GIS ; et
la génération, par l'unité GIS, d'une paire de données synchrones conformément au flux vidéo MISB, l'émission de trames d'images et des métadonnées se synchronisant temporellement avec les trames d'images dans la paire de données vers une unité de traitement de données trame par trame, et la génération, par l'unité de traitement de données, d'une vidéo dynamique conformément aux trames d'images et aux métadonnées se synchronisant temporellement avec les trames d'images ;
dans le cas où l'extrémité de réception et l'unité GIS ne sont pas situées au sein d'un même réseau local et l'extrémité de réception a reçu le deuxième flux vidéo, l'encapsulation, par une extrémité d'émission de média en flux continu, du deuxième flux vidéo conformément à un protocole de communication pour obtenir un troisième flux vidéo, et l'émission du troisième flux vidéo vers un serveur de média en flux continu ;
le transfert, par le serveur de média en flux continu, du troisième flux vidéo vers une extrémité de réception de média en flux continu d'une manière à émission transparente ;
la décomposition, par l'extrémité de réception de média en flux continu, du troisième flux vidéo en le deuxième flux vidéo, et la décomposition du deuxième flux vidéo pour obtenir les métadonnées ; et
l'encapsulation du deuxième flux vidéo et des métadonnées se synchronisant temporellement avec le deuxième flux vidéo pour obtenir le flux vidéo MISB, et l'émission du flux vidéo MISB vers l'unité GIS.

2. Procédé de présentation de vidéo dynamique selon la revendication 1, comportant en outre :
l'encapsulation, par l'extrémité d'émission, du premier flux vidéo et des métadonnées se synchronisant temporellement avec le premier flux vidéo directement pour obtenir le flux vidéo MISB, et l'émission du flux vidéo MISB vers l'extrémité de réception par le biais de la liaison de communication ; et
le transfert, par l'extrémité de réception, du flux vidéo MISB à l'unité GIS.

3. Procédé de présentation de vidéo dynamique selon la revendication 1, dans lequel la génération, par l'unité de traitement de données, de la vidéo dynamique conformément aux trames d'image et aux métadonnées se synchronisant temporellement avec les trames d'image comporte la génération, par l'unité de traitement de données, de données d'image monotrame et de données d'élément géographique se synchronisant temporellement avec les données d'image monotrame conformément aux trames d'image et aux métadonnées, et la restitution des données d'image monotrame et des données d'élément géographique sur une interface d'affichage.

4. Procédé de présentation de vidéo dynamique selon la revendication 1, dans lequel le champ prédéfini est un champ d'information d'amélioration supplémentaire, SEI.

5. Système de présentation de vidéo dynamique pour un GIS, comportant :
une extrémité d'émission configurée pour délivrer en sortie un premier signal de commande pour la collecte du premier flux vidéo et un deuxième signal de commande pour la collecte des métadonnées par le biais d'un même circuit d'horloge de référence, le premier signal de commande et le deuxième signal de commande ayant une même horloge de référence ; pour obtenir le premier flux vidéo et les métadonnées comportant le temps absolu conformément au premier signal de commande et au deuxième signal de commande ; pour encapsuler les métadonnées dans des champs prédéfinis du premier flux vidéo trame par trame d'une manière à synchronisation en temps absolu, de façon à obtenir le deuxième flux vidéo comportant les métadonnées, et pour émettre le deuxième flux vidéo vers une extrémité de réception par le biais d'une liaison de communication ;
l'extrémité de réception configurée pour décomposer le deuxième flux vidéo pour obtenir les métadonnées, encapsuler le deuxième flux vidéo et les métadonnées se synchronisant temporellement avec le deuxième flux vidéo pour obtenir un flux vidéo MISB, et émettre le flux vidéo MISB vers une unité GIS ; et
l'unité GIS configurée pour générer une paire de données synchrones conformément au flux vidéo MISB, et émettre des trames d'images et les métadonnées se synchronisant temporellement avec les trames d'images dans la paire de données vers une unité de traitement de données de l'unité GIS trame par trame, de sorte que l'unité de traitement de données génère une vidéo dynamique conformément aux trames d'images et aux métadonnées se synchronisant temporellement avec les trames d'images ;
dans lequel le système de présentation de vidéo dynamique comporte en outre un serveur de média en flux continu,
dans lequel dans le cas où l'extrémité de réception et l'unité GIS ne sont pas situées au sein d'un même réseau local et l'extrémité de réception a reçu le deuxième flux vidéo, une extrémité d'émission de média en flux continu de l'extrémité de réception encapsule le deuxième flux vidéo conformément à un protocole de communication pour obtenir un troisième flux vidéo, et émet le troisième flux vidéo vers le serveur de média en flux continu, dans lequel le serveur de média en flux continu transfère le troisième flux vidéo vers une extrémité de réception de média en flux continu d'une manière à émission transparente,
dans lequel l'extrémité de réception de média en flux continu décompose le troisième flux vidéo en le deuxième flux vidéo, décompose le deuxième flux vidéo pour obtenir les métadonnées, encapsule le deuxième flux vidéo et les métadonnées se synchronisant temporellement avec le deuxième flux vidéo pour obtenir le flux vidéo MISB, et émet le flux vidéo MISB vers l'unité GIS.

6. Système de présentation de vidéo dynamique selon la revendication 5, dans lequel l'unité de traitement de données comporte :
une unité de traitement d'image configurée pour générer des données d'image monotrame conformément à la trame d'image ;
une unité de traitement d'élément configurée pour générer des données d'élément géographique conformément aux métadonnées ; et
une unité de restitution d'image configurée pour restituer les données d'image monotrame et les données d'élément géographique sur une interface d'affichage.

7. Système de présentation de vidéo dynamique selon la revendication 5, dans lequel l'extrémité d'émission comporte :
une unité de collecte de données configurée pour collecter les métadonnées et le premier flux vidéo ; et
une unité d'encapsulation de données configurée pour générer le deuxième flux vidéo comportant les métadonnées.
